# EUROPEAN PATENT APPLICATION

(11) **EP 4 015 461 A1**
(43) Date of publication of application: **22.06.2022**
(21) Application number: 20215679.0
(22) Date of filing: 18.12.2020
(51) Int. Cl.: C02F 1/00, C02F 1/48

(54) **WATER ACTIVATION DEVICE AND CONTAINER**

(71) Applicant: BE WTR Sàrl, 1003 Lausanne (CH)
(72) Inventor: RUBESA, Pier, 1422 Grandson (CH)
(74) Representative: P&TS SA (AG, Ltd.)

(57) **Abstract**

A device for the treatment of drinking beverages by modifying a characteristic of the beverage, the device comprising a vessel (20) for containing the beverage (30) and, adjacent said vessel, a passive electromagnetic resonator (40) having a resonance frequency in the MF/HF/VHF radio bands

## Description

### Technical domain

The present invention concerns a device for the electromagnetic conditioning of drinking water or other aqueous beverages, as well as a container for water or beverages including such a device.

### Related art

Document EP 2364954 B1 discloses an active device for the electromagnetic treatment of wastewater. The device of this publication comprises an active oscillator driving a flat antenna on a printed circuit board, and an active source of two electromagnetic vibrations in a harmonic relationship, at a frequency between 2 kHz and 7 kHz. The inventors disclose a modification in the physical properties of the waste waters that improves the treatment efficiency of the wastewater, in particular by reducing the amount of bacteria-produced sludge.

The use of electromagnetic stimulation for reducing the deposit of limescale from hard water is also known. Such devices modify in various ways the interaction water-solute and can reduce fouling by altering the energetically preferred form of the precipitate crystals or favouring the formation of more soluble forms of calcium carbonate. FR 2607574 A, for example, discloses a device with open-ended solenoids wound around a water conduit and energized by a suitable active source.

Passive resonators do not rely on an energy supply, but rather enhance locally and slightly the local electromagnetic field intensity. They are much less used than active emitters in this field of endeavour, and the lack of an active source creates a prejudice against their effectiveness. Yet, some isolated instances of such applications exist. WO 0027522 A1, for example, discloses a passive split-ring resonator that is applied to many uses, including the improvement of the energetic efficiency of many systems. Among the many uses of this device, the authors propose to use it for the improvement of the taste of wine and food, by placing them on a ceramic plate into which the resonator is embedded. The electromagnetic parameters of the resonator are not specified in this disclosure.

The effects of electromagnetic fields on the property of water and aqueous solutions are also well documented in the scientific literature. To cite only some, the article from Okazaki, T., Umeki, S., Orii, T. et al. Investigation of the effects of electromagnetic field treatment of hot spring water for scale inhibition using a fibre optic sensor. Sci Rep 9, 10719 (2019) documents the effect of extremely long wavelength electromagnetic excitation on the scale formation and on the zeta potential of CaCO₃ particles dispersed in water. The effect of static magnetic fields on water is further disclosed by the article of Chibowski, Emil & Szcześ, Aleksandra & Hotysz, Lucyna. (2018). Influence of Magnetic Field on Evaporation Rate and Surface Tension of Water. Colloids and Interfaces. 2. 68. 10.3390/colloids2040068.

### Short description of the invention

Known devices, while effective in their specific use cases, are not appropriate or not practical for the treatment of drinking water at the point of consumption. The present invention aims to provide a solution to this technical problem overcoming the limitations of the state of the art. The solution is provided by the object of the appended claims.

In particular, the aims of the invention are attained by a device for the treatment of drinking beverages by modifying a physical characteristic of the beverage, the device comprising a vessel for containing the beverage and, adjacent said vessel, a passive electromagnetic resonator having a resonance frequency in the MF/HF/VHF radio bands.

The physical characteristics may be taken from the group of: zeta potential, surface tension, hydration force, viscosity.

Preferably, the passive resonator comprises at least one conductive track on an insulator, which could be a flat insulating board; the at least one conductive track can be fabricated with a metallic strip clad on the insulator with a configuration providing a resonance frequency in the MF/HF/VHF radio bands. Advantageously, the vessel may have a flat base resting on the passive electromagnetic resonator and the electromagnetic resonator can be contained in a holder permanently united to the vessel, or detachable therefrom, or be a separate entity.

The passive resonator of the invention causes a local amplification, in a region of the vessel adjacent to the resonator, of the background electromagnetic field, or at least of components of the background electromagnetic fields that are close to a resonance peak of the resonator and are capable to excite said resonance. Preferably, the resonator will be configured to place the resonance in one ISM band or close enough to it, to amplify the background field generated by ISM activity.

The conductive track can assume a variety of shapes; in tests, spiral coils, stars, and zigzag have proven effectiveness, but other shapes are possible, provided the resonance frequency is in the desired bands. The configuration of the conductors can be designed by using known simulation, using in particular finite elements, and CAE tools.

### Short description of the drawings

Exemplary embodiments of the invention are disclosed in the description and illustrated by the drawings in which:
Figure 1 illustrates schematically a water container with a passive resonator according to one aspect of the present invention.
Figures 2a to 2d show some possible configurations of the passive resonator of the invention.
Figure 3 and 4 plot resonance spectra of a resonators according to the invention.

### Examples of embodiments of the present invention

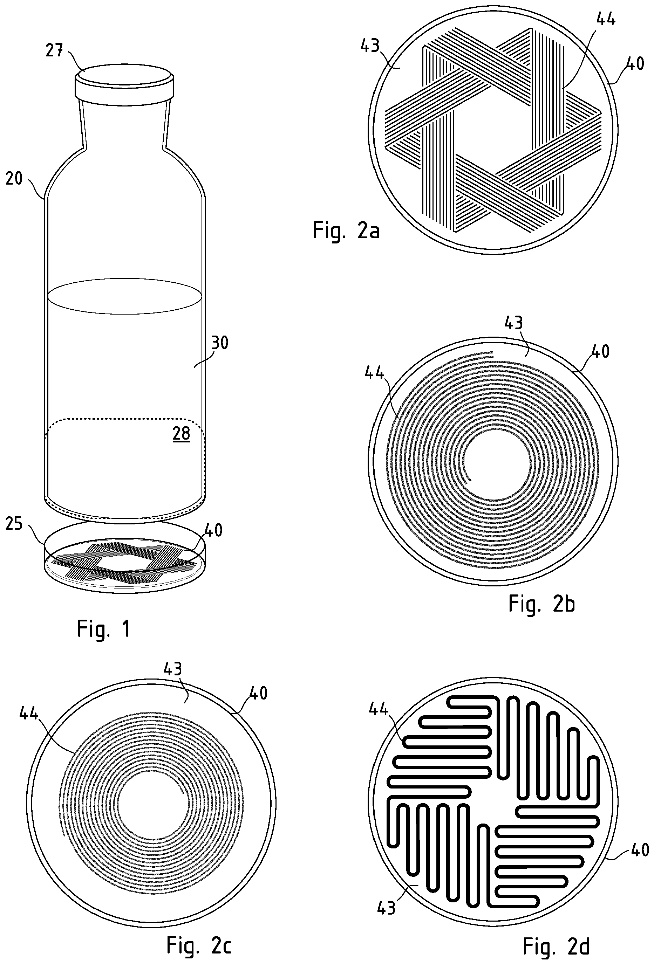

**Figure 1** illustrates a vessel **20** for containing water **30.** Although this disclosure will refer mostly to water for brevity, it is intended that the presented embodiments may be configured or intended for conditioning drinking water, that is an aqueous solution of diverse chemical species and gases, possibly with the inclusion of micro- and/or nanoparticles, or water-based beverages.

The vessel **20** may be a glass bottle, or a polymer bottle, or be realized in any suitable material for containing water and beverages providing that the bottom part of it is not made with an electrically conductive material. When it is desirable to keep the beverage cold, or hot, the vessel **20** may be an insulated bottle, for example a double-walled bottle. Steel can be used on the upper part of the bottle, however a nonconductive material shall be used for the bottom part, as for example polymer or glass. The vessel has a mouth for filling and pouring which may, although this is not an essential feature of the invention, be closed by a cap **25** for preserving liquid pressure or preventing from dirt and aerosols.

The vessel **20** is proximate to a passive electromagnetic resonator **30** that is placed, in the presented embodiment, in contact with the outer side of the vessel. In the bottom region. In other, non-represented variants, the electromagnetic resonator **30** may be inside the vessel and surrounded by the water or beverage, but the resonators outside the vessel have shown a satisfactory effect and, since they do not enter in contact with the water, there is no risk of contamination. In regulatory terms, avoiding any direct nor indirect contact with food is highly desirable.

A favourable position for the electromagnetic resonator **40** is between the bottom of the vessel and the surface on which the vessel normally rests. In this position, a flat resonator is well placed to influence a considerable volume of water inside the vessel; moreover, this placement is visually unobtrusive and leaves a great liberty in the aesthetic design of the vessel **30.** The resonator **40** may be contained in a holder **25** fitting to the bottom of the vessel.

Figure 1 shows the holder **25** separated from the vessel **20** to simplify the presentation; the holder **25** with the resonator **40** may be separate and detachable from the vessel **30** in embodiments of the invention, or else the holder **25** and the resonator **40** may be permanently united with the vessel **30** in other embodiments of the invention. Possibly, the resonator **40** may be separate and detachable from the vessel **30** and be simply interposed between the vessel **20** and the underlying table in the way of a coaster, without departing from the scope of the invention.

The holder **25** may be fabricated with plastic, or ceramic, or any suitable material. If the materials used to make the holder **25** are of a nature to modify the frequency of the resonator **40,** for example because they include conductive, magnetic, or water-rich constituents, their influence should be considered in the resonator's design.

As mentioned above, flat resonators are preferred in the realization of this invention since they have proven their effectiveness, can be produced effectively and, when made in a flat disc shape, adapt easily to the bottom of many liquid vessels. The invention includes however other shapes and realizations, for example curved or flexible resonators.

Controlled germination experiments have shown that structures forming passive electromagnetic resonators with a resonance frequency in the MF/HF/VHF radio bands, particularly in the region of the electromagnetic spectrum between 10 and 80 MHz, are effective in modifying the germination behaviour of various grains in aqueous environment. Tasting tests performed in controlled conditions have also hinted that the same structures that show a significant effect on germination alter favourably the taste, mouthfeel, or organoleptic properties of drinking water or beverages.

**Figure 2a** shows a possible structure of a passive resonator **40** according to one aspect of the invention and comprising a flat dielectric substrate **43** in the shape of a flat disc, and conductive tracks **44** on one or both faces of said disc, forming a circuit that has the desired resonance frequency and electromagnetic characteristics. This construction, in a diameter of approximatively 5-20 cm, suitable for coupling with many usual vessel shapes, can often provide a resonance frequency in the desired region without using additional electronic components.

The liquid container is transportable and can be placed in environment with various different electromagnetic ambient noise spectra. In order to maximize the probability of amplifying a substantial entry signal, the frequency chosen can be advantageously an ISM (Industrial Scientific and Medical) band as 13,56 MHz, 27,12 MHz or 40,68 MHz. The recent multiplication of devices using such signal enhances the probability of having a maximum ambient noise signal.

The shape and topology of the conductive tracks **44** can take many shapes without departing to the broad spirit of the invention. In the embodiment represented in **figure 2a** the tracks form a star-like pattern that has the distributed inductance and capacitance suitable for producing a resonance in the desired range. Although the figure shows only one side of the resonator, the circuit is completed by conductive tracks on the opposite side as well.

**Figure 2b** shows another possible realization of the invention in which the conductive track **44** has the shape of a bifilar spiral coil going from the centre to the periphery. The bifilar coil presents multiple resonance modes, including common-mode ones in which the two conductors forming the bifilar line carry the same current in the same direction, and differential modes in which the two conductors carry opposite currents. A unifilar resonator, as represented in **figure 2c****,** would show the same common-mode resonances, but not the differential ones, and is also comprised in the scope of the invention.

**Figure 2d** illustrates a third possible structure of the resonator **40** of the invention. In this variant, the conductors **44** are arranged in a zigzag pattern with a fourfold symmetry. It should be understood that figures 2a-2d are merely examples of resonators that have proved their effectiveness when used in the invention and do not exhaust the spectrum of shapes that the resonator of the invention can take.

The resonator of the invention can be obtained by any method of production capable of providing the desired resonance frequencies in the needed shape. Advantageously, it can be realized with the techniques used in the production of printed circuits board. The dielectric substrate **43** could be a thin sheet of insulating material. Suitable substrates include composite materials, for example woven glass embedded in epoxy resin, phenolic-impregnated paper, solid sheets of dielectric material such as PTFE glass or ceramic, or flexible films like polyimide foils.

The conductive tracks **44** can be realized by etching a copper cladding on the substrate. Alternatively, metal conductors or strips can be glued or laminated on the substrate **44,** or else the desired circuit can be drawn in conductive ink by an ink-jet printer, or in any other suitable way. The thickness of the conductors can vary without departing from the invention within certain limits, but a thickness of a fraction of millimetre is in general suitable.

To improve the resistance against external agents, such as water, acids or detergents, the conductive tracks can be metallized with a thin film of an inert metal such as tin, silver, nickel, or gold. An electrodeless plating of nickel and gold is effective and economical.

Since the resonator is passive and does not need a connection to external circuits, the conductive tracks are preferably covered by an insulating and nonconductive coating for protection, for example a lacquer-like coating, silicone- or epoxy-based. A conformal coating can be applied for extra protection, as known in the art.

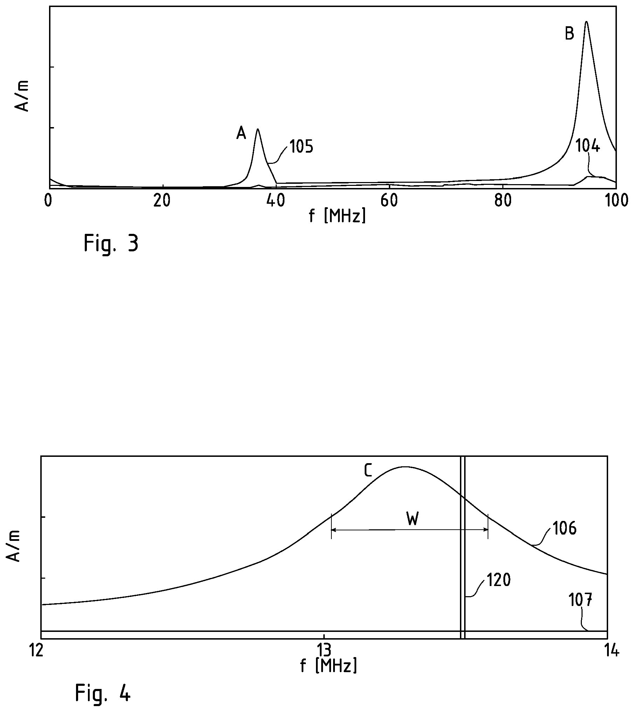

**Figure 3** plots the results of a simulation of the effect of a resonator as represented in figure 2b on a water carafe as represented in figure 1, and the current resulting from an incident plane electromagnetic wave with a vertical propagation vector, in two polarizations (plot **104** and **105**). The simulation shows two resonance peaks at about 36 MHz **(A)** and 95 MHz **(B).** The resonator amplifies the strength of the electromagnetic field in a liquid-filled neighbouring region **28** of the vessel **20** (visible in figure 1), whereby the water contained in the vessel **20** is treated. This resonator produced, in a realistic simulation, a local amplification by a factor 67 at the 36 MHz resonance.

**Figure 4** is a plot resulting from the simulation of a resonator as depicted in figure 2c on a water carafe. The horizontal axis, which is considerably enlarged, selects a region of the electromagnetic spectrum close to the ISM band at 13,56 MHz, indicated by the rectangle **120.** The field intensity **106** exhibits a resonance peak **C** with centre frequency of environ 13,5 MHz and a bandwidth **W** (here shown at -3 dB below the maximum amplification). Plot **107** represents the intensity of the simulated background field, which was constant. This resonator has produced, in a realistic simulation, a more than 20-fold amplification of the background field in the resonance peak. The lower gain in comparison with the resonator of figure 2b can be explained by the smaller size of the coil and by the lower resonance frequency.

The resonance peak **C** is close to the ISM band **120** or includes the ISM band **120** in its width **W;** the amplitude of the background electromagnetic field, always present at these frequencies, will be sensibly enhanced in the neighbouring region **28** close to the resonator **40.**

### Reference symbols in the figures

- 20: vessel
- 25: holder
- 27: cap
- 28: field-enhanced region
- 30: water, beverage, liquid
- 40: resonator
- 43: insulating board
- 44: conductors
- 104: second polarization
- 105: first polarization
- 106: resonance
- 107: background
- 120: ISM band
- A-C: resonance peaks
- W: bandwidth

## Claims

1. A device for the treatment of drinking beverages by modifying a characteristic of the beverage, the device comprising a vessel (20) for containing the beverage (30) and, adjacent said vessel, a passive electromagnetic resonator (40) having a resonance frequency in the MF/HF/VHF radio bands.

2. The device of the preceding claim, wherein the characteristics is taken from the group of: zeta potential, surface tension, hydration force, viscosity, germination effect, taste, mouthfeel.

3. The device of any one of the preceding claims, wherein the passive resonator (40) comprises at least one conductive track (44) on an insulator (43).

4. The device of the preceding claim, wherein the insulator (43) is a flat insulating board, and the at least one conductive track (44) is realized as a metallic strip clad on the insulator, whereby the conductive track is configured to provide a resonance frequency in the MF/HF/VHF radio bands.

5. The device of the preceding claim, wherein the vessel (20) has a flat base resting on the passive electromagnetic resonator (40).

6. The device of claim 4, wherein the conductive track (44) is shaped as a spiral coil, or as a star.

7. The device of any one of the preceding claims, wherein the electromagnetic resonator (40) is contained in a holder (25) permanently united to the vessel (20).

8. The device of any one of the preceding claims, wherein the resonance frequency is such that the electromagnetic resonator (40) amplifies locally the background electromagnetic field in an ISM band (120).
